# EUROPEAN PATENT APPLICATION

(11) **EP 1 593 991 A1**
(43) Date of publication of application: **09.11.2005**
(21) Application number: 04707651.8
(22) Date of filing: 03.02.2004
(51) Int. Cl.: G02B 5/30, G02F 1/1335

(54) **SUBSTRATE FOR VERTICAL ALIGNMENT AND PROCESS FOR PRODUCING VERTICALLY ALIGNED LIQUID CRYSTAL RETARDATION FILM**

(30) Priority: 12.02.2003 JP 2003034040
(71) Applicant: NIPPON KAYAKU KABUSHIKI KAISHA, Tokyo 102-8172 (JP); Polatechno Co., Ltd, Nakakubiki-gun, Niigata 944-0101 (JP)
(72) Inventor: TANAKA, Kouichi, Kita-ku, Tokyo 115-0042 (JP)
(74) Representative: Wablat, Wolfgang
(86) International application number: PCT/JP2004/001043
(87) International publication number: WO 2004/072699

(57) **Abstract**

A substrate for alignment whereby a vertically aligned liquid crystal retardation film can be obtained by a simple method without special treatment, and a fabrication method of a vertically aligned liquid crystal retardation film using the substrate for alignment, are provided. By using a substrate for vertical alignment in which a layer of an acrylic polymer is formed on the surface of a layer of an inorganic substance, and providing a layer of a liquid crystal compound on the substrate by coating, etc., the liquid crystal compound can be vertically aligned.

## Description

### Technical Field

The present invention relates to a substrate for alignment for vertically aligning a liquid crystal compound, and a fabrication method of a vertically aligned liquid crystal retardation film using the same.

### Background Art

It is known that when a liquid crystal compound layer is formed on a substrate having the so-called alignment function, such as a rubbing-treated polyimide or polyvinyl alcohol, and given an appropriate temperature and time, the liquid crystal compound is aligned in the rubbing direction. The aligning direction of a liquid crystal compound is generally the rubbing direction; however, the liquid crystal compound can be aligned vertically to an alignment substrate surface depending on the kind of the alignment substrate and the treatment condition. Many methods for aligning a liquid crystal compound vertically to the alignment substrate surface are known. Various methods recited in, for example, Patent Document 1, 2 and 3, and Non-patent Document 1 have been proposed.

### [Patent Document 1]

Japanese Patent Application Laying Open (KOKAI) No. 10-319408

### [Patent Document 2]

Japanese Patent Application Laying Open (KOKAI) No. 2002-174724

### [Patent Document 3]

Japanese Patent Application Laying Open (KOKAI) No. 2002-365635

### [Patent Document 4]

Japanese Patent Application Laying Open (KOHYO) No. 2000-514202

### [Patent Document 5]

Japanese Patent Application Laying Open (KOKAI) No. 2002-69450

### [Patent Document 6]

WO97/44703

### [Patent Document 7]

Japanese Patent Application Laying Open (KOKAI) No. 9-52962

### [Non-patent Document 1]

Liquid Crystal Handbook Editors Committee, ed., Handbook of Liquid Crystal, Maruzen Co. Ltd., p.358.

The present invention is to provide a novel substrate for vertical alignment for vertically aligning a liquid crystal compound.

The inventors conducted an extensive study to achieve the above object, and has newly found that by forming a liquid crystal compound layer on a vertical alignment substrate in which an acrylic polymer layer is formed on an inorganic substance layer surface and by aligning it in a liquid crystal state, the liquid crystal compound can be aligned vertically to the alignment substrate surface to achieve the present invention.

### Disclosure of the Invention

That is, the present invention relates to:
(1) a substrate for vertical alignment in which an acrylic polymer layer is formed on the surface of an inorganic substance layer;
(2) the substrate for vertical alignment recited in (1), characterized in that the inorganic substance is aluminum, aluminum oxide or silver, and that a layer of the inorganic substance is formed on a polymer film;
(3) the substrate for vertical alignment recited in (1) or (2) wherein the acrylic polymer is a polymer which is polymerized using at least an alkyl acrylate;
(4) the substrate for vertical alignment recited in (1) to (3) wherein the acrylic polymer layer has a thickness of 0.01 µm to 20 µm;
(5) a fabrication method of a vertically aligned liquid crystal retardation film, characterized in that a layer of a liquid crystal compound is formed on the layer of an acrylic polymer of the vertical alignment substrate recited in (1) to (4), and that the liquid crystal compound is aligned vertically to the substrate for vertical alignment in a liquid crystal state, and immobilized while maintaining the alignment state;
(6) the fabrication method of the vertically aligned liquid crystal retardation film recited in (5), characterized in that the liquid crystal compound is a liquid crystal acrylic ester compound to be immobilized, and that the liquid crystal compound is immobilized by irradiating the compound with ultraviolet rays;
(7) an optical film comprising the vertical alignment substrate recited in (2) or (3) and a vertically aligned liquid crystal retardation film aligned vertically to the surface of the alignment film; and
(8) a reflective or a transflective liquid crystal display having the optical film recited in (7).

### Best Mode for Carrying Out the Invention

An inorganic substance layer used for a vertical alignment substrate of the present invention includes a substrate which itself is formed of an inorganic substance such as a glass plate, and an inorganic layer which is formed on a plastic film by vapor deposition, sputtering, coating, etc. An inorganic substance includes, for example, an inorganic metal such as aluminum and silver, and an inorganic compound such as silica and aluminum oxide, most preferably aluminum, aluminum oxide and silver. Aluminum and aluminum oxide are not strictly classified; for example, a case is included where when aluminum is vapor-deposited on a polymer film, the deposition layer surface is oxidized and forms aluminum oxide. The thickness of the inorganic substance layer is not limited as long as the layer is formed as a film uniform to a certain degree, but preferably 10 nm to 10 µm, more preferably 0.01 µm to 5 µm. The inorganic substance layer surface is smooth preferably to a degree that it does not have an influence on the alignment of a liquid crystal compound layer finally formed.

A substrate used for a vertical alignment substrate of the present invention includes an inorganic compound and a polymer film, as described above. It is preferable that the polymer film be smooth to a degree that it does not have an influence on the alignment of a liquid crystal compound layer finally formed, and that the workability be excellent on forming of an inorganic substance layer and forming an acrylic polymer layer further thereon. Such polymer film includes a film composed of a polyester, polycarbonate, polyallylate, polyether sulfone, triacetyl cellulose, cycloolefin polymer, etc. The films may be added, for improving the workability, with a plasticizer such as an orthophosphate such as triphenylphosphate and a phthalate such as ethylphthalyl ethyl glycolate. The thickness of the polymer film is preferably 10 µm to 200 µm, more preferably 20 µm to 100 µm approximately.

An acrylic polymer used for a vertical alignment substrate of the present invention is a copolymer of a (meth)acrylate and another copolymerizable compound. The (meth) acrylate as a main component includes, for example, an alkyl (meth) acrylate such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, n-pentyl (meth) acrylate, n-hexyl (meth)acrylate, n-heptyl (meth)acrylate, n-octyl (meth)acrylate, n-nonyl (meth)acrylate, n-decyl (meth)acrylate, or n-dodecyl (meth) acrylate. The another copolymerizable compound includes a compound having a carboxyl group such as acrylic acid, methacrylic acid, maleic acid or itaconic acid, and a (meth)acrylate having a hydroxyl group such as 2-hydroxyethyl (meth) acrylate, 2-hydroxypropyl (meth)acrylate, 3-chloro-2-hydroxypropyl (meth) acrylate or diethylene glycol mono (meth) acrylate. Copolymerization of such (meth)acrylate having a carboxyl group and a hydroxyl group with, for example, the alkyl acrylate described above allows the resultant polymer to be crosslinked by further adding a crosslinking agent thereto, thereby imparting an appropriate hardness to an acrylic polymer layer, and changing the solvent solubility and improving the solvent resistance. Various compounds as other copolymerizable compounds may be optionally added, such asisobornyl (meth)acrylate, dicyclopentenyloxyethyl (meth)acrylate N,N-dimethylaminopropylacrylamide, acryloyl-morpholine, N,N-isopropylacrylamide, acrylamide and N-methylolacrylamide.

The formulation ratios of these compounds are approximately 50 wt% to 98 wt% for the alkyl acrylate, preferably 70 wt% to 98 wt%, and 2 wt% to 50 wt%, preferably 2 wt% to 30 wt% for the other copolymerizable compound. The other compound optionally added is approximately 0 to 20 wt% to the mixture of the alkyl acrylate and the other copolymerizable compound, preferably 0 to 10 wt%.

For copolymerizing these compounds, commonly, they are added with a polymerization initiator, and polymerized by heating, etc. The polymerization initiator includes azobisisobutyronitril, benzoyl peroxide, di-t-butyl peroxide, and cumene peroxide. The initiator of approximately 0.01 wt% to 1 wt%, preferably 0.1 wt% to 0.5 wt% to the mixture of the above polymerizable compounds is added at polymerization.

For adjusting the hardness and solvent resistance of the acrylic polymer after polymerization, crosslinking treatment by a crosslinking agent may be performed. The crosslinking agent includes an aromatic and aliphatic isocyanate compound such as toluenediisocyanate or hexamethylenediisocyanate, a melamine compound such as butyl-etherified styrol melamine or trimethylol melamine, an diamine compound, an epoxide resin compound, and a urea resin compound. The crosslinking agent of approximately 1 wt% to 30 wt%, preferably 5 wt% to 20 wt% to the polymer after polymerization is added at crosslinking.

The acrylic polymer used in the present invention is obtained, for example, by dissolving the (meth)acrylate and the other copolymerizable compound and the optionally added polymerizable compound in an organic solvent such as ethyl acetate, butyl acetate, toluene, xylene, isopropyl alcohol, methyl ethyl ketone or methyl isobutyl ketone, and heating and polymerizing in the presence of the polymerization initiator. Alternatively, a commercial acrylic polymer can be used, such as Paraloid AT-746, Paraloid AT-63, Paraloid WR-97, ParaloidAT-400, ParaloidAT-410, ParaloidAT-76, ParaloidAT-81, ParaloidAT-147, ParaloidAT-85, ParaloidAT-148, Paraloid AT-9LO, Paraloid AU-6085, Paraloid AU-608B, Paraloid AU-608X, Paraloid AU-1164, Paraloid AU-1004, Paraloid AU-1033, Paraloid AU-946 or Paraloid AU-1166, most preferably Paraloid AU-608B and Paraloid AU-1166 (manufactured by Rohm & Haas Co.).

A vertical alignment substrate of the present invention is obtained, for example, by coating a solution of the above acrylic polymer added with a crosslinking agent on an inorganic substance layer provided on a film of polyester, performing crosslinking treatment while removing the solvent by heating, and forming an acrylic polymer layer. The solvent used in adjusting the solution of the acrylic polymer added with the crosslinking agent includes aromatics such as toluene and xylene, alcohols such as methanol, ethanol, isopropyl alcohol, n-butanol and isobutanol, ketones such as acetone, methyl ethyl ketone, methyl isobutyl ketone, 4-pentanone, cyclopentanone and cyclohexanone, esters such as methyl acetate, ethyl acetate, butyl acetate, methyl lactate and ethyl lactate, cellosolves such as propylene glycol monomethylether acetate, methyl cellosolve, ethyl cellosolve and butyl cellosolve, and hydrocarbons such as hexane, cyclohexane, methyl cyclohexane and heptane. Such solvents may be used alone; a plurality of the solvents may be used as a mixed solvent in a ratio according to the objective. The method of coating is not specifically limited as long as a smooth surface can be achieved to a degree that the method does not have an influence on the alignment of a liquid crystal compound layer, but preferably a method such as the spin coating, wire-bar coating, gravure coating, microgravure coating, calender coating, spray coating, meniscus coating, dip coating method or slot-die method. The thickness of the acrylic polymer layer is preferably approximately 0. 01 µm to 20 µm, more preferably 0.1 to 10 µm.

By using the vertical alignment substrate thus obtained of the present invention, forming a liquid crystal compound layer on the alignment substrate, and allowing to stand under an appropriate condition to develop a liquid crystal state, a liquid crystal compound can be aligned vertically to the alignment substrate. The liquid crystal compound is, for example, a liquid crystal compound with a low molecular or high molecular weight exhibiting the nematic phase in the definite temperature range, preferably one whose alignment state can be immobilized after alignment. Since a liquid crystal compound can be used as it is as a vertically aligned liquid crystal retardation film if the vertical alignment state can be immobilized, it is preferable that a liquid crystal compound with low molecular weight be a polymerizable one. Such a compound is one which has a polymerizable substituent such as (meth) acryloyl group or epoxide group, exhibits liquid crystallinity in a certain temperature range, and can polymerize in the presence of a polymerization initiator. Concretely, liquid crystal acrylates shown below and the like, described in Patent Document 4, Patent Document 5 and Patent Document 6, are exemplified.

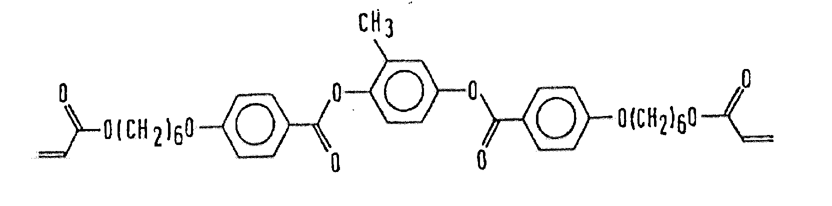

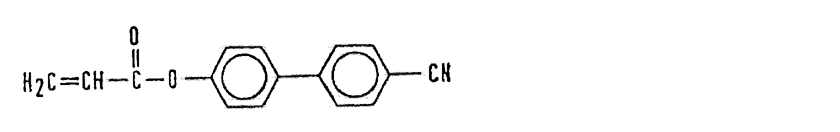

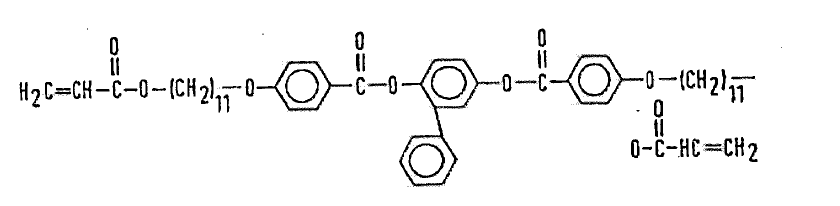

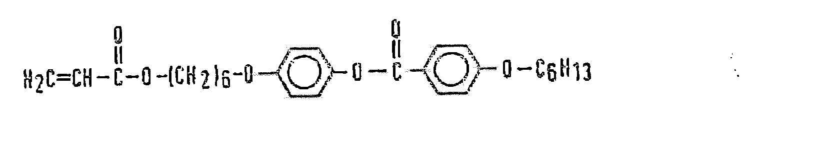

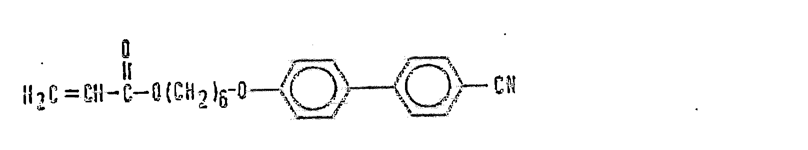

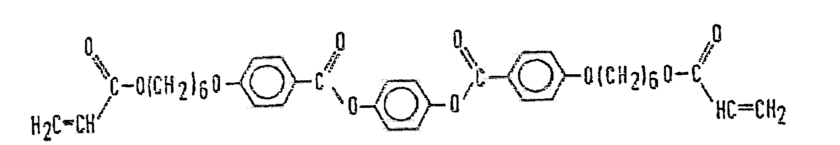

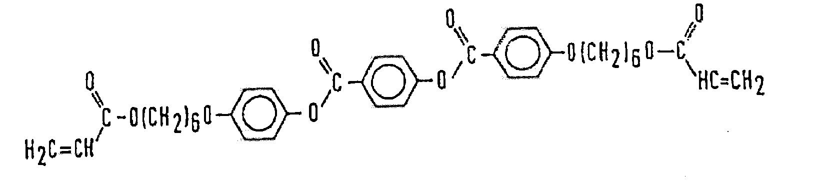

Alternatively, a liquid crystal compound having an epoxide group, its mixture, and a liquid crystal acrylate exhibiting discotic liquid crystallinity described in Patent Document 7 are included; but a liquid crystal acrylate polymerizable by ultraviolet rays in the presence of a photopolymerization initiator is preferable. Such liquid crystal acrylate can be used in one kind, but is used preferably as a mixture of two or more kinds thereof for enlarging the temperature range to develop liquid crystallinity and controlling birefringence.

A method of aligning the above liquid crystal compound vertically to a vertical alignment substrate surface is, for example, to coat a solution of the liquid crystal compound containing a polymerization initiator on the acrylic polymer surface of the alignment substrate of the present invention. The coating method preferably involves making a solution of the compound dissolved in a solvent described below and coating it using a coating apparatus. The solvent to dissolve the liquid crystal compound, differs depending on the solvent solubility of the compound to be used, the wettability to be coated to the acrylic polymer layer of the vertical alignment substrate, etc., but includes aromatics such as toluene and xylene, alcohols such as methanol, ethanol, isopropyl alcohol, n-butanol and isobutanol, ketones such as acetone, methyl ethyl ketone, methyl isobutyl ketone, 4-pentanone, cyclopentanone and cyclohexanone, esters such as methyl acetate, ethyl acetate, butyl acetate, methyl lactate and ethyl lactate, Cellosolves such as propylene glycol monomethylether acetate, methyl cellosolve, ethyl cellosolve and butyl cellosolve, and hydrocarbons such as hexane, cyclohexane, methylcyclohexane and heptane. Such solvents can be used alone or as a mixed solvent where a plurality of the solvents are mixed in a ratio according to the objective. The coating apparatus preferably involves coating methods such as the spin coating, wire-bar coating, gravure coating, microgravure coating, calender coating, spray coating, meniscus coating, dip coating and slot-die methods. The thickness of the liquid crystal compound is decided suitably by a desired retardation value and a birefringence of the liquid crystal compound, preferably 0.1 µm to 7 µm, more preferably 0.5 µm to 5 µm approximately.

Then, after the solvent is removed by heating, the liquid crystal compound is aligned vertically to the vertical alignment substrate, at the same time of the removal of the solvent, depending on the kind of the compound, or by allowing the liquid crystal compound that has exhibited a liquid crystal state to stand at a temperature suitable for alignment for a certain time. Next, when a photopolymerization initiator is used as the polymerization initiator, ultraviolet rays are irradiated at a temperature where the liquid crystal compound can keep the alignment state to polymerize the liquid crystal compound to immobilize the alignment state. The irradiation amount of the ultraviolet rays is commonly approximately 100 to 1000 mJ/cm². The rays are irradiated in air, or under a nitrogen atmosphere if the polymerization reaction proceeds with difficulty.

The film having the liquid crystal compound layer of which the alignment state is thus immobilized can be used as a vertically aligned liquid crystal retardation film. For example, when the liquid crystal compound can be removable from the acrylic polymer layer of the vertical alignment substrate of the present invention, only the liquid crystal compound can be transferred to another film (e.g., a retardation film and a polarizing film) by using an adhesive, etc. For example, such vertically aligned liquid crystal retardation film can improve the visibility angle dependency of an axially oriented retardation film by transferring the liquid crystal compound to the axially oriented retardation film having the visibility angle dependency by using an adhesive, etc. Since the vertical alignment substrate after the transferring is reusable, there is no need for fabricating a vertical alignment substrate every time, thus reducing remarkably a cost. A vertical alignment substrate of the present invention having an acrylic polymer layer on an inorganic compound layer of aluminum, aluminum oxide or silver and a vertically aligned liquid crystal retardation film formed on the alignment substrate by the method of the present invention, can also be used as a unified article as it is. Alternatively, an optical film of the present invention comprising the alignment substrate and the vertically aligned liquid crystal retardation film of the present invention in which the alignment substrate and the vertically aligned liquid crystal retardation film are unified via an adhesive or a bond, can be used as a reflective transmissive film for a reflective or transflective liquid crystal display. The reflective and transflective liquid crystal displays commonly use a circularly polarizing film, which commonly has a structure where a retardation film known as the quarter wave plate, which has a phase difference of one-quarter of a wavelength, and the polarizing film are laminated such that the absorption axis of the polarizing film and the slow axis of the retardation film make an angle of 45°. The quarter wave plate is not limited to a piece of the retardation film, but for improving the wavelength dependency retardation films have, it includes a quarter wave plate into which retardation films having a plurality of different retardation values are laminated at such angles that the slow axes of the films function substantially as one quarter wave plate as a whole laminate after lamination. Since this circularly polarizing film can absorb reflected light from a reflective plate, by arranging a TN (twisted nematic) or non-twisted, parallelly or vertically aligned liquid crystal cell between the reflective plate and the circularly polarizing film, and controlling circularly polarized incident light by the liquid crystal cell, image display becomes possible. However, when the circularly polarizing film and the liquid crystal cell have the visibility angle dependency, the direction in which clear images can be seen is limited to the frontal direction because the retardation values change with viewing angles. By contrast, the reflective or transflective liquid crystal display of the present invention using the optical film of the present invention can simultaneously impart a function as a reflective film and a function of compensating for the visibility angle of a vertically aligned liquid crystal retardation film, and can provide a liquid crystal display having an excellent visibility angle characteristic.

### Examples

The present invention will be further specifically illustrated by way of examples and comparative examples hereinafter.

### Example 1

Paraloid AU-608B (manufactured by Rohm & Haas Co.) was diluted with butyl acetate to prepare a 10 wt% solution; then, the solution was added with toluene diisocyanate of 10 wt% to the Paraloid solid content; the solution was coated uniformly on the aluminum-deposited surface of a polyester film with aluminum vapor-deposited thereon by a wire-bar so that the thickness after drying became 2 µm; and removal of the solvent and crosslinking treatment were performed by heating to obtain a vertical alignment substrate of the present invention.

Next, a mixed solution of an ultraviolet-curable liquid crystal compound of 25% in solid concentration was prepared by dissolving 36.6 parts by weight of: 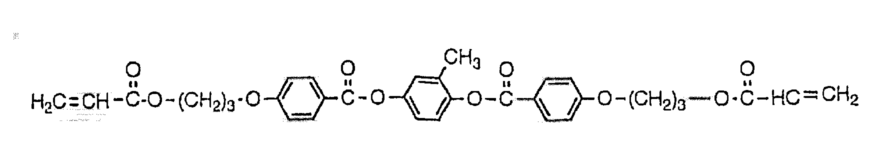 , 42.1 parts by weight of: 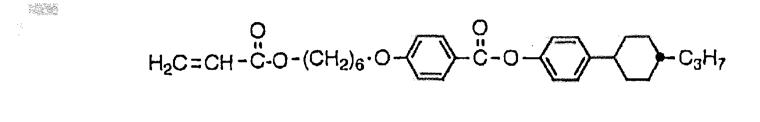 , 9.3 parts by weight of: 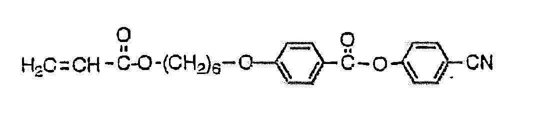 , and a photopolymerization initiator Irgacure 907 (manufactured by Ciba Speciality Chemicals Corp.) of 12 parts by weight in a mixed solvent of toluene of 210 parts by weight and cyclohexanone of 90 parts by weight. The solution was coated uniformly on the acrylic polymer surface of the vertical alignment substrate by a spin coater so that the thickness after drying became approximately 1 µm; the solvent was removed by heating; then, the coating was irradiated and polymerized by a high-pressure mercury lamp (120 W/cm) to fabricate a vertically aligned liquid crystal retardation film. The obtained liquid crystal retardation film (polymerized liquid crystal compound layer) was peeled off the acrylic polymer layer of the vertical alignment substrate, and transferred to a glass plate coated with an adhesive, thereby obtaining a transparent liquid crystal retardation film. Then, the liquid crystal retardation film transferred to the glass plate was measured for changes in the retardation values at a wavelength of 590 nm with the inclination of the film from its front by an automatic birefringence analyzer (manufactured by Oji Scientific Instruments: KOBRA-21ADH). The result is shown in Figure 1. Referring to Figure 1, the obtained liquid crystal retardation film is found to be aligned vertically to the vertical alignment substrate surface.

### Example 2

A liquid crystal retardation film was fabricated as in the operations of Example 1, except for using a glass plate instead of the aluminum-deposited polyester film. The result is shown in Figure 1. Referring to Figure 1, the obtained liquid crystal retardation film is found to be aligned vertically to the vertical alignment substrate surface.

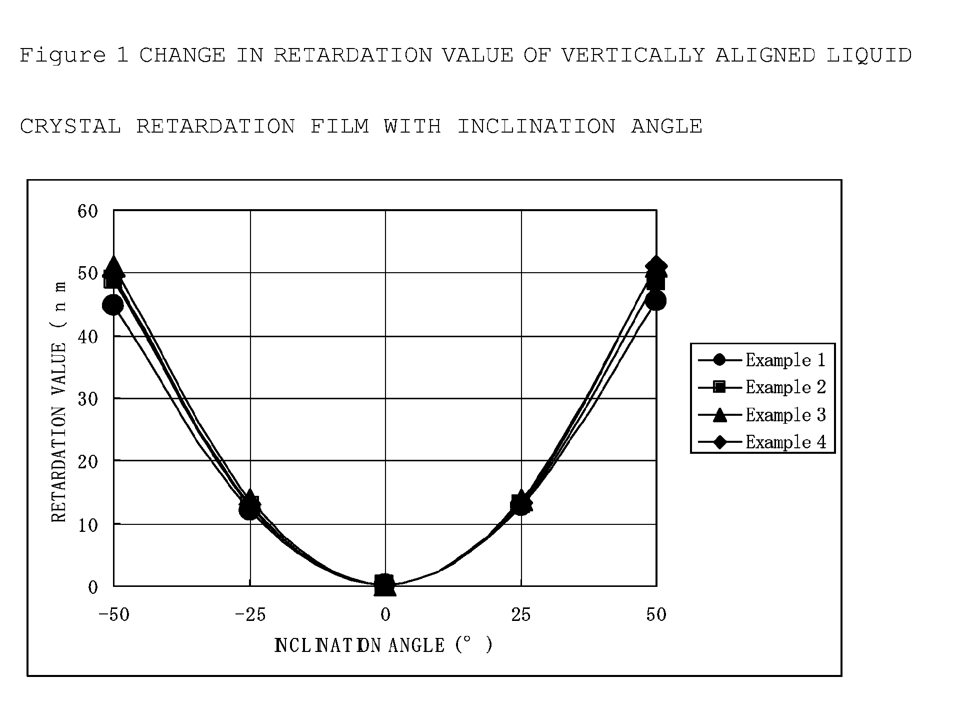

### Example 3

A liquid crystal retardation film was fabricated as in the operations of Example 1, except for using Paraloid AU-1166 (manufactured by Rohm & Haas Co.) instead of Paraloid AU-608B (manufactured by Rohm & Haas Co.). The result is shown in Figure 1. Referring to Figure 1, the obtained liquid crystal retardation film is found to be aligned vertically to the vertical alignment substrate surface.

### Example 4

A liquid crystal retardation film was fabricated again as in the operations of Example 1, using a vertical alignment substrate used in Example 1 from which the liquid crystal compound layer had been peeled off. The result is shown in Figure 1. Referring to Figure 1, the obtained liquid crystal retardation film is found to be aligned vertically to the vertical alignment substrate surface.

### Comparative Example

### Comparative Example 1

Operations were conducted as in Example 1, except for using a polycarbonate film with no deposition instead of the aluminum-deposited polyester film. The liquid crystal compound was not aligned at all.

From the results of Examples 1 to 3 and Comparative Example, it is found in the method of the present invention that the liquid crystal compound is aligned vertically to the vertical alignment substrate. From the result of Example 4, it is also found that the vertical alignment substrate of the present invention is reusable.

### Industrial Applicability

The present invention provides a vertical alignment substrate in which an acrylicpolymer layer is formed on an inorganic substance layer surface, a fabrication method of a vertically aligned liquid crystal retardation film using the alignment substrate, an optical film comprising the alignment substrate and the liquid crystal retardation film, and a reflective or transflective liquid crystal display having the optical film. The use of the vertical alignment substrate of the present invention causes a liquid crystal compound to be aligned vertically to the alignment substrate surface. The vertical alignment substrate does not have a change in its surface state due to oxidation easily caused by changing atmospheres of temperature, humidity, etc., which change is involved in the use of an inorganic substance layer alone, and can be reused. Therefore, when the use of a vertically aligned liquid crystal retardation film alone is desirable, the liquid crystal retardation film is peeled off the vertical alignment substrate and can be reused, thereby providing a remarkable cost reduction and allowing the liquid crystal retardation film to be made thin because there is no need for fabricating an alignment substrate every time. The use of the vertically aligned liquid crystal retardation film also improves the visibility angle dependency of a uniaxially oriented retardation film and a liquid crystal cell. Moreover, the use of the optical film of the present invention provides a reflective or transflective liquid crystal display excellent in the visibility angle characteristic.

## Claims

1. A substrate for vertical alignment in which a layer of an acrylic polymer is formed on the surface of a layer of an inorganic substance.

2. The substrate for vertical alignment according to Claim 1, **characterized in that** the inorganic substance is aluminum, aluminum oxide or silver, and that a layer of the inorganic substance is formed on a polymer film.

3. The substrate for vertical alignment according to Claim 1 or 2, wherein the acrylic polymer is a polymer polymerized using at least an alkyl acrylate.

4. The substrate for vertical alignment according to one of Claims 1 to 3, wherein the acrylic polymer layer has a thickness of 0.01 µm to 20 µm.

5. A fabrication method of a vertically aligned liquid crystal retardation film, **characterized in that** a layer of a liquid crystal compound is formed on the layer of an acrylic polymer of the substrate for vertical alignment according to one of Claims 1 to 4, and that the liquid crystal compound is aligned vertically to the surface of the substrate for vertical alignment in a liquid crystal state, and immobilized while maintaining the alignment state.

6. The fabricationmethodof a vertically aligned liquid crystal retardation film according to Claim 5, **characterized in that** the liquid crystal compound is a liquid crystal acrylic acid ester compound to be immobilized, and that the liquid crystal compound is immobilized by irradiating the compound with ultraviolet rays.

7. An optical film comprising a substrate for vertical alignment according to Claim 2 or 3 and a vertically aligned liquid crystal retardation film aligned vertically to the surface of the alignment film.

8. A reflective ortransflective liquid crystal display having an optical film according to Claim 7.
